# EUROPÄISCHE PATENTSCHRIFT

(11) **EP 1 117 907 B1**
(45) Veröffentlichungstag und Bekanntmachung des Hinweises auf die Patenterteilung: **20.11.2002**
(21) Anmeldenummer: 99969467.2
(22) Anmeldetag: 21.09.1999
(51) Int. Cl.: F01N 3/00

(54) **ABGASREINIGUNGSANLAGE UND VERFAHREN ZUR KATALYTISCHEN VERRINGERUNG DES SCHADSTOFFGEHALTS IM ABGAS EINER VERBRENNUNGSANLAGE**
EXHAUST GAS CLEANING SYSTEM AND METHOD FOR CATALYTICALLY REDUCING THE CONTENT OF POLLUTANTS IN THE EXHAUST GAS OF AN INTERNAL COMBUSTION SYSTEM
SYSTEME DE PURIFICATION DE GAZ D'ECHAPPEMENT ET PROCEDE DE REDUCTION CATALYTIQUE DE LA TENEUR EN POLLUANTS DES GAZ D'ECHAPPEMENT D'UN SYSTEME A COMBUSTION INTERNE

(30) Priorität: 21.09.1998 DE 19843136
(43) Veröffentlichungstag der Anmeldung: 25.07.2001
(73) Patentinhaber: SIEMENS AKTIENGESELLSCHAFT, 80333 München (DE)
(72) Erfinder: NEUFERT, Ronald, D-96247 Michelau (DE)
(86) Internationale Anmeldenummer: DE9903008
(87) Internationale Veröffentlichungsnummer: WO00017493

(56) Entgegenhaltungen:
- DE-A- 19 536 571
- US-A- 5 628 186
- PATENT ABSTRACTS OF JAPAN vol. 013, no. 177 (M-818), 26. April 1989 (1989-04-26) & JP 01 008310 A (MITSUBISHI HEAVY IND LTD;OTHERS: 01), 12. Januar 1989 (1989-01-12)

## Beschreibung

Abgasreinigungsanlage und Verfahren zur katalytischen Verringerung des Schadstoffgehalts im Abgas einer Verbrennungsanlage.

Die Erfindung bezieht sich auf eine Abgasreinigungsanlage für eine Verbrennungsanlage mit einem vom Abgas durchströmbaren Katalysator gemäß dem Oberbegriff des Anspruchs 1. Sie bezieht sich weiter auf ein Verfahren zur katalytischen Verringerung des Schadstoffgehalts im Abgas einer Verbrennungsanlage gemäß dem Oberbegriff des Anspruchs 5. Eine derartige Vorrichtung und ein derartiges Verfahren sind z.B. aus der US 5,628,186 bekannt.

Unter einem funktionalen Zusammenhang wird eine mathematische Funktion verstanden, die einem Zustand, der durch eine oder mehrere Variablen festgelegt ist, einen Wert zuordnet. Der funktionale Zusammenhang kann insbesondere die Form einer Kennlinie oder eines mehrdimensionalen Kennfeldes haben.

Der Einsatz fossiler Energieträger in einer Verbrennungsanlage, insbesondere in einem Verbrennungsmotor zur Traktion eines Kraftfahrzeugs, wirft aufgrund des Schadstoffgehalts im Abgas große Probleme, vor allem in den Industriestaaten, auf.

Zur Verminderung der Schadstoffe im Abgas eines Ottomotors sind verschiedene edelmetallhaltige Katalysatoren bekannt, an denen Kohlenwasserstoffe und Kohlenmonoxid mit Stickoxiden und Restsauerstoff zu Kohlendioxid, Stickstoff und Wasser umgewandelt werden. Zur Verringerung des Schadstoffausstoßes eines Dieselmotors wird derzeit vielerorts an der Entwicklung eines geregelten Dieselkatalysators gearbeitet. Mit ihm soll es möglich sein, den Stickoxidgehalt im Abgas eines Dieselmotors erheblich zu senken. Bevorzuge wird ein sogenannter DeNOx-Katalysator eingesetzt, welcher die im Abgas enthaltenen Stickoxide mit einem geeigneten Reaktionsmittel, meist Ammoniak, nach dem Verfahren der Selektiven Katalytischen Reduktion (SCR) zu umweltfreundlichem Stickstoff und Wasser umsetzt. Hierbei wird das Reaktionsmittel oder eine Vorstufe des Reaktionsmittels in Strömungsrichtung des Abgases vor dem Katalysator in das Abgas eingebracht und tritt dann in vorzugsweise homogener Vermischung mit den im Abgas enthaltenen Stickoxiden in den Katalysator ein.

Eine Verbrennungsanlage zur Traktion eines Fahrzeugs wird mit variabler Last und Drehzahl betrieben. Das bedeutet, daß die pro Zeiteinheit erzeugten Stickoxidmengen und die Abgasmassenströme und -temperaturen großen Schwankungen unterliegen. Es ist derzeit keine Lösung bekannt, die pro Zeiteinheit in das Abgas einzubringende Reaktionsmittelmenge derart einzustellen, daß unabhängig vom Betriebszustand des Verbrennungsmotors hohe Abscheideraten für die Stickoxide erreicht werden bei gleichzeitig verschwindendem Ausstoß des Reaktionsmittels in die Umwelt. Erschwerend kommt hinzu, daß ein Reaktionsmittel wie Ammoniak giftig ist und bereits bei Konzentrationen von nur wenigen ppm eine erhebliche Geruchsbelastigung für den Menschen darstellt. Aus diesem Grund ist der Ausstoß von Ammoniak in die Umwelt, der sogenannte Reaktionsmittelschlupf, unbedingt zu vermeiden.

Aus der US 5,628,186 und aus der DE 195 36 571 A1 sind eine Vorrichtung und ein Verfahren bekannt, bei dem die pro Zeiteinheit in das Abgas eingebrachte Reaktionsmittelmenge in Abhängigkeit von betriebsrelevanten Parametern des Motors, des Katalysators und des Abgases eingestellt wird. In einer Kontrolleinheit ist ein funktionaler Zusammenhang in Form eines Kennfelds abgespeichert, mit dessen Hilfe aus den betriebsrelevanten Parametern der Stickoxidausstoß des Motors und die pro Zeiteinheit einzudüsende Menge des Reaktionsmittels berechnet wird. Um Veränderungen der tatsächlich vom Motor erzeugten Stickoxidmenge, z.B. aufgrund von Alterungserscheinungen oder sonstigen Langzeiteffekten, in die Berechnungen der Stickoxidmenge einzubeziehen, wird das Kennfeld wahrend des Betriebs korrigiert. Dazu mißt ein Sensor unter geeigneten Bedingungen die Schadstoffkonzentration im Abgas des Verbrennungsmotors und vergleicht den Meßwert mit dem Wert, der mittels Kennfeld aus den betriebsrelevanten Parametern errechnet wurde. Bei einer Abweichung des errechneten vom gemessenen Wert jenseits einer Toleranzgrenze wird eine Korrektur des Kennfelds vorgenommen.

Die Durchführung eines solchen Verfahrens zur Anpassung der Reaktionsmitteldosierung an beispielsweise Alterungserscheinungen der Verbrennungsanlage verlangt Messungen der Stickoxidmenge im Abgas. Da es zur Zeit noch keine stickoxidempfindlichen Sensoren gibt, die schnell genug reagieren, um bei rasch wechselnden Betriebsbedingungen zuverlässige Meßwerte liefern, ist ein wie insbesondere in der DE 195 36 571 A1 beschriebenes Verfahren nachteiligerweise schwer durchzuführen.

Es ist die Aufgabe der vorliegenden Erfindung, eine Abgasreinigungsanlage für eine Verbrennungsanlage und ein Verfahren zur katalytischen Verringerung des Schadstoffgehalts im Abgas einer Verbrennungsanlage anzugeben, mit dem die Reaktionsmitteldosierung auf einfache Weise an veränderte Bedingungen in Folge von Alterungserscheinungen oder Verschleiß der Verbrennungsanlage angepaßt werden kann.

Bezüglich der Abgasreinigungsanlage wird diese Aufgabe erfindungsgemäß gelöst durch die Merkmale des Anspruchs 1 zu umfaßt die Abgasreinigungsanlage einen vom Abgas durchströmbaren Katalysator, eine Dosierungsvorrichtung zur Einbringung eines Reaktionsmittels in das Abgas und eine mit der Dosierungsvorrichtung verbundene Kontrolleinheit. Die Kontrolleinheit ist für die Berechnung der pro Zeiteinheit von der Verbrennungsanlage emittierten Schadstoffmenge aus betriebsrelevanten Parametern der Verbrennungsanlage mittels eines funktionalen Zusammenhangs ausgelegt, wobei erfindungsgemäß die Kontrolleinheit eine an eine Datenübermittlung mit einen externen Meßgerät oder einer externen Steuereinheit angepaßte Schnittstelle aufweist.

Um die Reaktionsmitteldosierung an veränderte Bedingungen in Folge von Alterungserscheinungen oder Verschleiß der Verbrennungsanlage anzupassen, muß der funktionale Zusammenhang überprüft werden. Dies geschieht durch Messung der Schadstoffmenge im Abgas und Vergleich des gemessenen Werts mit dem aus dem funktionalen Zusammenhang errechneten Wert. Liegt der berechnete Wert außerhalb eines Toleranzbereichs um den gemessenen Wert, wird der funktionale Zusammenhang anhand eines Korrekturprogramms korrigiert.

Die Erfindung geht in einem ersten Schritt von der Überlegung aus, daß die zur Zeit verfügbaren stickoxidempfindlichen Sensoren Sensoren sind, die zur Erzeugung eines zuverlässigen Meßwerts Meßdaten über eine längere Meßperiode kumulieren müssen. Diese Sensoren brauchen über eine längere Zeit gleichbleibende Betriebsbedingungen für die Durchführung von Messungen mit zuverlässigen Ergebnissen. Diese Betriebsbedingungen sind im Normalbetrieb der Verbrennungsanlage nicht erreichbar. Insbesondere in einem Kraftfahrzeug sind die Betriebsbedingungen des Verbrennungsmotors in der Regel großen Schwankungen unterworfen. Stickoxidmessungen, die zuverlässig aussagekräftige Meßwerte erbringen sollen, sind daher nur bei einem Betrieb der Verbrennungsanlage erzielbar, der speziell auf den betreffenden Sensor zugeschnitten ist.

In einem zweiten Schritt geht die Erfindung von der Überlegung aus, daß der für die Stickoxidmessung nötige Testbetrieb der Verbrennungsanlage wegen der einzuhaltenden Betriebsbedingungen von Fachpersonal durchgeführt werden sollte. Speziell bei der Überprüfung der Stickoxidemission eines Verbrennungsmotors eines Kraftfahrzeugs kann nicht davon ausgegangen werden, daß der Halter des Kraftfahrzeugs ohne weiteres in der Lage ist, den Testbetrieb durchzuführen. Damit die Überprüfung der Stickoxidmessung keinen unzumutbaren zusätzlichen Aufwand für den Betreiber der Verbrennungsanlage bedeutet, ist es sinnvoll, eine derartige Überprüfungen mit der Durchführung von Wartungsarbeiten an der Verbrennungsanlage, oder speziell bei Kraftfahrzeugmotoren mit der Durchführung der gesetzlich vorgeschriebenen Abgassonderuntersuchungen, zusammenzulegen.

In einem dritten Schritt geht die Erfindung von der Überlegung aus, daß eine von Fachpersonal durchzuführende Stickoxidmessung sinnvollerweise nicht mit einem Sensor durchgeführt wird, der zur Dosierungsvorrichtung der Abgasreinigungsanlage gehört, sondern von einem externen, also nicht zur Dosierungsvorrichtung gehörigen Sensor. Dies kann beispielsweise ein Sensor einer von Fachpersonal bedienten Abgasprüfanlage in einer Werkstatt sein. In einer Abgasprüfanlage kann ein komfortabler, zuverlässiger und damit teurer Sensor wesentlich kostengünstiger zum Einsatz kommen, als dies bei einem festen Einbau des Sensors in die Abgasreinigungsanlage möglich wäre. Für die Korrektur des funktionalen Zusammenhangs mittels Stickoxidmessungen, die von einer Abgasprüfanlage durchgeführt werden, ist ein Datenaustausch zwischen der Kontrolleinheit der Abgasreinigungsanlage und der Abgasprüfanlage nötig. Um einen solchen Datenaustausch zu ermöglichen, ist es sinnvoll, die Kontrolleinheit mit einer Schnittstelle auszustatten, an die das Meßgerät oder die Steuereinheit der Abgasprüfanlage anschließbar ist.

Eine Abgasreinigungsanlage, deren Kontrolleinheit an eine Abgasprüfanlage anschließbar ist, benötigt zur Überprüfung des funktionalen Zusammenhangs keinen eigenen Sensor zur Messung der Schadstoffemission der Verbrennungsanlage. Dies stellt insbesondere bei der Nachrüstung der Verbrennungsanlage mit einer Abgasreinigungsanlage einen Kostenvorteil dar, weil nicht nur der Sensor an sich, sondern auch der Einbau des Sensors in den Abgaskanal der Verbrennungsanlage wegfällt. Da eine Überprüfung und Korrektur des funktionalen Zusammenhangs von der Abgasprüfanlage durchgeführt werden kann, kann bei einer derartigen Kontrolleinheit der Abgasreinigungsanlage auch auf ein eigenes Programm zur Korrektur des funktionalen Zusammenhangs verzichtet werden. Dies vereinfacht die Kontrolleinheit und wirkt sich günstig auf die Herstellungskosten der Kontrolleinheit aus.

Vorteilhafterweise ist die Schnittstelle der Kontrolleinheit als eine Steck- oder Schraubverbindung ausgestaltet. Hierdurch ist ein einfaches manuelles Verbinden der Kontrolleinheit mit einem Meßgerät oder einer Steuereinheit einer Abgasprüfanlage möglich. Die Schnittstelle kann leicht zugänglich an der Kontrolleinheit angebracht sein, so daß der Anschluß eines Steckers mit der Hand ohne weiteres möglich ist.

Dadurch, daß von der Kontrolleinheit über die Schnittstelle Daten an ein externes Meßgerät oder an eine externe Steuereinheit übermittelbar sind, kann der in der Kontrolleinheit gespeicherte funktionale Zusammenhang in Form von Daten der Abgasprüfanlage übermittelt werden, die ihn anhand von Meßwerten überprüft und gegebenenfalls korrigiert. Der funktionale Zusammenhang wird anschließend der Kontrolleinheit zurückübermittelt. Eine auf diese Weise ausgestaltete Kontrolleinheit muß nicht in der Lage sein, den funktionalen Zusammenhang selbständig zu überprüfen und zu korrigieren. Dadurch vereinfacht sich die Ausgestaltung der Kontrolleinheit erheblich.

Zweckmäßigerweise ist die Kontrolleinheit derart ausgelegt, daß als Daten die momentan anliegenden Werte der betriebsrelevanten Parameter der Verbrennungsanlage und eventuell auch des Abgases durch die Schnittstelle übermittelbar sind. Diese Werte werden zur Überprüfung des funktionalen Zusammenhangs von der Abgasprüfanlage benötigt. Die Werte stehen der Kontrolleinheit zu jedem Zeitpunkt während des Betriebs der Abgasreinigungsanlage zur Verfügung. Sie können der Abgasprüfanlage auf diese Weise ohne großen Aufwand zur Verfügung gestellt werden, so daß die Abgasprüfanlage die Werte dann nicht gesondert ermitteln muß.

In einer weiteren Ausgestaltung der Erfindung ist die Kontrolleinheit für die Korrektur des funktionalen Zusammenhangs ausgelegt. Bei dieser Ausgestaltung der Erfindung ist die Kontrolleinheit für den Empfang der Schadstoffmeßwerte von der Abgasprüfanlage ausgelegt, sowie auch für eine Überprüfung des funktionalen Zusammenhangs anhand dieser Meßwerte. Diese Ausgestaltung hat den Vorteil, daß der funktionale Zusammenhang nicht der Abgasprufanlage zur Überprüfung und Korrektur übermittelt werden muß, sondern sofort nach Übermittlung der Meßwerte von der Kontrolleinheit korrigiert werden kann.

Ein weiterer Vorteil läßt sich dadurch erreichen, daß die Kontrolleinheit dafür ausgelegt ist, den funktionalen Zusammenhang auf der Basis von Meßwerten an einzelnen Stellen der betriebsrelevanten Parameter über den gesamten Parameterwertebereich oder einen Teilbereich davon zu korrigieren. Eine derart ausgestaltete Kontrolleinheit kann die Korrektur des funktionalen Zusammenhangs durchführen, ohne daß dafür Messungen der Schadstoffemission der Verbrennungsanlage über einen gesamten Parameterwertebereich vorliegen müssen.

Bezüglich des Verfahrens wird die Aufgabe erfindungsgemäß gelöst durch die Merkmale des Anspruchs 5. Dabei wird ein Reaktionsmittel dem Abgas zugegeben und an einem Katalysator mit einem Schadstoff umgesetzt. Mittels eines funktionalen Zusammenhangs werden aus betriebsrelevanten Parametern der Verbrennungsanlage die pro Zeiteinheit von der Verbrennungsanlage emittierte Schadstoffmenge und daraus eine Zugabemenge des Reaktionsmittels von einer Kontrolleinheit berechnet und der funktionale Zusammenhang überprüft sowie bei Bedarf korrigiert. Erfindungsgemäß wird die Schadstoffmenge mit einem externen Meßgerät gemessen und die Überprüfung anhand der Meßwerte durchgeführt, wobei die Überprüfung und gegebenenfalls die Korrektur des funktionalen Zusammenhangs in Verbindung mit Wartungsarbeiten an der Verbrennungsanlage durchgeführt wird. Dies kann bei einem Verbrennungsmotor in einem Kraftfahrzeug beispielsweise in Verbindung mit der gesetzlich vorgeschriebenen Abgassonderuntersuchung, einer Hauptuntersuchung oder einer Inspektion durchgeführt werden. Dieses Verfahren bedeutet für den Halter des Kraftfahrzeugs den wenigsten Aufwand.

Für die Anpassung der Reaktionsmitteldosierung an veränderte Betriebsbedingungen wie beispielsweise Alterungserscheinungen oder Verschleiß der Verbrennungsanlage, ist die Messung der von der Verbrennungsanlage emittierten Schadstoffmenge in Abhängigkeit von den Werten der betriebsrelevanten Parameter nötig. Die Durchführung dieser Messungen erfordert an das Meßgerät angepaßte Betriebsbedingungen und sollte daher von einem speziell auf diesen Zweck ausgerichteten Gerät überwacht werden. Sinnvollerweise bilden das Meßgerät und das Überwachungsgerät eine Einheit. Da es aufwendig ist, jede Abgasreinigungsanlage mit einem solchen Meß- und Überwachungsgerät auszustatten, ist es sinnvoll, die Schadstoffmessung mit einem externen, das heißt nicht zur Abgasreinigungsanlage zugehörigen Meßgerät zu messen. Meßgerät und Überwachungsgerät sind beispielsweise Teile einer Abgasprüfanlage.

Da ein fest zu einer Abgasreinigungsanlage installiertes Meßgerät aus wirtschaftlichen Gründen nicht so komfortabel und zuverlässig ausgelegt sein kann wie dies bei einem zur Abgasprüfanlage zugehörigen Meßgerat möglich ist, ist das Messen der Schadstoffemission einer Verbrennungsanlage mit einem externen Meßgerät besonders einfach durchzuführen.

Auch das Überprüfen und gegebenenfalls das Korrigieren des funktionalen Zusammenhangs wird auf einfache Weise von einem externen Gerät, beispielsweise einer Abgasprüfanlage, durchgeführt. Eine solche Anlage verfügt über ein wesentlich komfortableres und exakteres Programm zur Überprüfung und Korrektur des funktionalen Zusammenhangs, als dies aus wirtschaftlichen Gründen bei einer Abgasreinigungsanlage der Fall ist. Auch ist ein Update eines einzigen zu einer Abgasprüfanlage zugehörigen Korrekturprogramms wesentlich einfacher und kostengünstiger durchzuführen, als das Programm einer jeden Abgasreinigungsanlage zu aktualisieren. Daher kann eine Abgasprüfanlage kostengünstig über modernste Technik verfügen.

In einer weiteren vorteilhaften Ausgestaltung der Erfindung wird die Überprüfung und die Korrektur des funktionalen Zusammenhangs von der Kontrolleinheit selbst durchgeführt. Dieses Verfahren bietet den Vorteil, daß sich der Datentransfer zwischen Kontrolleinheit der Abgasreinigungsanlage und der Abgasprüfanlage vereinfacht. Ferner bietet das Verfahren den Vorteil, daß die Abgasprüfanlage nicht für die Korrektur einer Vielzahl von verschiedenen funktionalen Zusammenhängen verschiedener Verbrennungsanlagen ausgelegt sein muß.

In vorteilhafter Ausgestaltung der Erfindung wird der funktionale Zusammenhang auf der Basis von Meßwerten an einzelnen Stellen der betriebsrelevanten Parameter über den gesamten Parameterwertebereich oder einen Teilbereich davon korrigiert. Dieses Verfahren hat den Vorteil, daß zur Überprüfung des funktionalen Zusammenhangs die Schadstoffemission der Verbrennungsanlage nicht über den gesamten Wertebereich eines jeden betriebsrelevanten Parameters gemessen werden muß, sondern eine Messung der Schadstoffemission an einigen ausgewählten Parameterwerten ausreicht. Die Korrektur kann beispielsweise durch Interpolation oder durch einen speziell auf die Verbrennungsanlage zugeschnittenen Korrekturalgorithmus durchgeführt werden.

In vorteilhafter Ausgestaltung der Erfindung übermittelt die Kontrolleinheit dem externen Meßgerät oder einem externen Steuergerät geeignete Werte der betriebsrelevanten Parameter für eine Überprüfung des funktionalen Zusammenhangs. Geeignet sind beispielsweise Werte, bei denen die berechnete Schadstoffemission bei kleinen Änderungen der Parameter großen Schwankungen unterworfen ist. Ferner sind beispielsweise diejenigen Werte geeignet, bei denen die berechnete Schadstoffemission bei Variation eines Parameters ein lokales Maximum ausbildet. Die Messung der Schadstoffemission an diesen, von der Kontrolleinheit ermittelten Werten vereinfacht die Durchführung des Korrekturmechanismus des funktionalen Zusammenhangs erheblich.

In bevorzugter Ausführungsform der Erfindung wird die Schadstoffmessung im Abgasstrom vor dem Katalysator durchgeführt. In diesem Bereich zwischen Verbrennungsanlage und Katalysator wird der Schadstoffgehalt im Abgas direkt gemessen.

In einer weiteren Ausführungsform der Erfindung wird die Schadstoffmessung im Abgasstrom hinter dem Katalysator durchgeführt und die Aktivität des Katalysators ermittelt. Wird gleichzeitig eine Schadstoffmessung vor dem Katalysator durchgeführt, so kann die Aktivität des Katalysators auf einfache Weise aus beiden Messungen ermittelt werden. Wird keine Schadstoffmessung vor dem Katalysator durchgeführt, so kann die Aktivität des Katalysators aus der mittels funktionalem Zusammenhang berechneten Schadstoffemission der Verbrennungsanlage und der hinter dem Katalysator im Abgas gemessenen Schadstoffmenge ermittelt werden. Die Aktivität des Katalysators kann bei der Berechnung der Zugabemenge des Reaktionsmittel in das Abgas bei normalem Betrieb der Abgasreinigungsanlage Berücksichtigung finden. Dies geschieht, indem die Aktivität als ein Parameter in die Korrektur des funktionalen Zusammenhangs einfließt. Dies führt dazu, daß bei Betrieb der Abgasreinigungsanlage bei einer verringerten Aktivität des Katalysators beispielsweise eine geringere Zugabemenge an Reaktionsmittel in das Abgas eingegeben wird.

Bei Unterschreiten der Aktivität des Katalysator unter einen festgelegten Wert wird zweckmäßigerweise ein Signal an eine Anzeigeeinrichtungen gegeben. Auf diese Weise wird beispielsweise ein Defekt oder die Untauglichkeit des Katalysators wegen Alterungserscheinungen signalisiert. Auf diese Weise wird darauf aufmerksam gemacht, daß der Katalysator ausgetauscht werden muß.

Ein Ausführungsbeispiel der Erfindung wird anhand einer Figur näher erläutert.

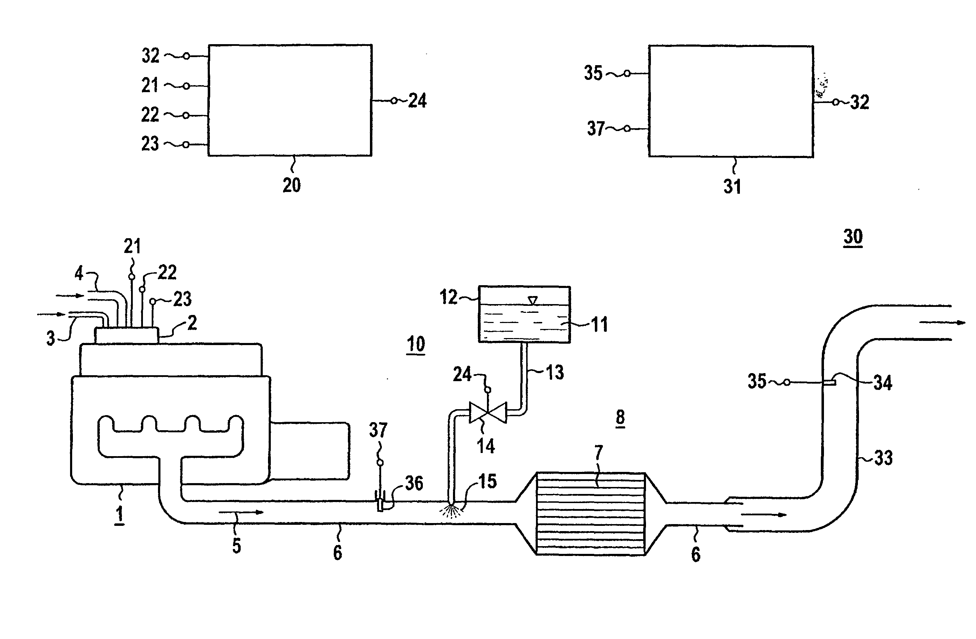

Figur 1 zeigt eine Verbrennungsanlage 1 mit einer Abgasreinigungsanlage 8 und einer daran angeschlossenen Abgasprüfanlage 30. Die Verbrennungsanlage 1 ist ein Dieselmotor zur Traktion eines Kraftfahrzeuges. Der Dieselmotor weist eine Schnittstelle 2 auf, an welcher die aktuellen Werte betriebsrelevanter Parameter abgegriffen werden können. Über eine Brennstoffzuführung 3 und eine Luftzuführung 4 wird dem Dieselmotor ein Brennstoff/Luftgemisch zur Verbrennung zur Verfügung gestellt. Das Abgas 5 des Dieselmotors wird über einen Krümmer in einen Abgaskanal 6 und weiter durch einen Katalysator 7 geleitet. Der Katalysator 7 ist als ein sogenannter DeNOx-Katalysator ausgebildet, welcher nach dem bekannten SCR-Verfahren Stickoxide mit Hilfe des Reaktionsmittels Ammoniak zu molekularem Stickstoff und Wasser umsetzt. Die benötigte Menge an Ammoniak wird durch Hydrolyse aus zudosiertem Harnstoff gewonnen.

Der Katalysator 7 ist Teil einer Abgasreinigungsanlage 8, die neben dem Katalysator 7 noch eine Dosierungsvorrichtung 10 und eine Kontrolleinheit 20 umfaßt. Die Dosierungsvorrichtung 10 ist für die Dosierung des Reaktionsmittels 11 (=Harnstoff) vorgesehen und umfaßt einen Vorratsbehälter 12 mit Harnstoff, eine Zuführleitung 13, ein Dosierventil 14 und eine Einspritzdüse 15.

Die Dosierungsvorrichtung 10 wird von der Kontrolleinheit 20 gesteuert. Über die Verbindungen 21, 22 und 23 zwischen der Schnittstelle 2 des Dieselmotors und der Kontrolleinheit 20 stehen der Kontrolleinheit 20 als betriebsrelevante Parameter die aktuellen Werte für Drehzahl, Stellung des Fahrpedals und Motortemperatur zur Verfügung. Aus diesen Werten berechnet die Kontrolleinheit 20 mittels eines funktionalen Zusammenhangs, der in Form eines mehrdimensionalen Kennfelds in der Kontrolleinheit 20 gespeichert ist, die Schadstoffmenge, die pro Zeiteinheit von dem Dieselmotor emittiert wird. Die Kontrolleinheit 20 ist über die Schnittstelle 24 mit dem Dosierventil 14 der Dosierungsvorrichtung 10 verbunden. Pro Zeiteinheit wird eine aus den betriebsrelevanten Parametern berechnete Menge an Reaktionsmittel 11 durch die Einspritzdüse 15 dem Abgas 5 beigegeben.

Die Kontrolleinheit 20 ist über eine Schnittstelle 32 mit der Steuereinheit 31 der Abgasprüfanlage 30 verbunden. Die Schnittstelle 32 ist als ein Male-Stecker ausgestaltet, an den ein entsprechender Female-Stecker eines Verbindungskabels zwischen Kontrolleinheit 20 und Steuereinheit 32 mit Leichtigkeit eingesteckt werden kann.

Die Abgasprüfanlage 30 umfaßt die Steuereinheit 31, einen Abgasstutzen 33 und Schadstoffsensoren 34,36, die mit der Steuereinheit 31 durch die Schnittstellen 35 und 37 verbunden sind. Die Schadstoffsensoren 34,36 messen die Stickoxidkonzentration durch Leitfähigkeitsänderung und sind im Abgas vor und hinter dem Katalysator 7 angeordnet. Der Schadstoffsensor 36 mißt die Stickoxidmenge im Abgas 5 des Motors und ist an einer dafür vorgesehenen Stelle in den Abgaskanal 6 eingebracht. Der Schadstoffsensor 34 ist mit dem Abgasstutzen 33 der Abgasprüfanlage 30 verbunden.

Zur Überprüfung des Kennfelds wird über die Schnittstelle 32 eine Verbindung zwischen der Kontrolleinheit 20 der Abgasreinigungsanlage 8 und der Steuereinheit 31 der Abgasprüfanlage 30 hergestellt. Dies geschieht im Rahmen von an dem Motor oder dem Fahrzeug durchzuführenden Wartungs-, Überprüfungsoder Reparaturarbeiten oder in Verbindung mit der gesetzlich vorgeschriebenen Abgassonderuntersuchung. Die Kontrolleinheit 20 berechnet dann aus dem gespeicherten Kennfeld geeignete Parameterwerte der betriebsrelevanten Parameter, an denen das Kennfeld überprüft werden soll. Diese Werte werden dann der Steuereinheit 31 der Abgasprüfanlage 30 übermittelt. Ferner werden der Steuereinheit 31 die aktuellen anliegenden Werte der betriebsrelevanten Parameter von der Kontrolleinheit 20 übermittelt. Die Steuereinheit 31 prüft, ob einer der geeigneten Werte anliegt und ob für eine Schadstoffmessung geeignete Betriebsbedingungen herrschen. Zur Herstellung dieser Betriebsbedingungen werden die Werte der betriebsrelevanten Parameter beispielsweise auf einer zur Abgasprüfanlage 30 zugehörigen Anzeige angezeigt. Die betriebsrelevanten Parameter können manuell eingestellt werden. Bei geeigneten Betriebsbedingungen wird eine oder mehrere Schadstoffmessungen durch den Sensor 36, der in Strömungsrichtung des Abgases vor Katalysator 7 angeordnet ist, durchgeführt. Die aus den Messungen ermittelte Stickoxidemission und die dazugehörigen Werte der betriebsrelevanten Parameter werden anschließend von der Steuereinheit 31 an die Kontrolleinheit 20 übermittelt.

Die Kontrolleinheit 20, die für die Überprüfung und Korrektur des Kennfelds ausgelegt ist, überprüft das Kennfeld anhand der von der Steuereinheit 31 übermittelten Werte. Dazu wird die zu den - von der Steuereinheit 31 übermittelten - Werten der betriebsrelevanten Parameter zugehörige Schadstoffemission der Verbrennungsanlage 1 berechnet und mit den Meßwerten verglichen. Liegt ein berechneter Wert jenseits einer Toleranz entfernt von dem betreffenden durch Messungen ermittelten Wert, so wird das mehrdimensionale Kennfeld entsprechend des durch Messung ermittelten Werts in einem Teilbereich um den Wert herum korrigiert. Auf diese Weise wird das Kennfeld auf der Basis einzelner durch Messung gewonnener Schadstoffwerte über den gesamten Parameterwertebereich des Kennfelds oder einen Teilbereich davon korrigiert.

In einem alternativen Verfahren wird das Kennfeld von der Steuereinheit 31 der Abgasprüfanlage 30 überprüft und gegebenenfalls korrigiert. Hierzu wird zusätzlich zu den Daten der betriebsrelevanten Parameter auch das Kennfeld von der Kontrolleinheit 20 an die Steuereinheit 31 übermittelt.

In einem weiteren Schritt des Verfahrens werden Schadstoffmessungen in Strömungsrichtung des Abgases vor und hinter dem Katalysator 7 mit Hilfe der beiden Schadstoffsensoren 36 und 34 durchgeführt. Aus den Meßwerten wird die Aktivität des Katalysators 7 ermittelt. Unterschreitet die Aktivität einen festgelegten Wert, so wird von der Steuereinheit 31 der Abgasprüfanlage 30 ein Signal an eine dafür vorgesehene - in der Abbildung nicht wiedergegebene - Anzeigeeinrichtungen gegeben. Auf diese Weise wird angezeigt, daß der Katalysator 7 defekt ist oder aufgrund alterungsbedingter Abnutzung ausgetauscht werden muß.

## Patentansprüche

1. Abgasreinigungsanlage (8) für eine Verbrennungsanlage (1) mit einem vom Abgas durchströmbaren Katalysator (7), einer Dosierungsvorrichtung (10) zur Einbringung eines Reaktionsmittels (11) in das Abgas (5) und einer mit der Dosierungsvorrichtung (10) verbundenen Kontrolleinheit (20), wobei die Kontrolleinheit (20) für die Berechnung der pro Zeiteinheit von der Verbrennungsanlage (1) emittierten Schadstoffmenge aus betriebsrelevanten Parametern der Verbrennungsanlage (1) mittels eines funktionalen Zusammenhangs ausgelegt ist und eine Schnittstelle (32) aufweist, **dadurch gekennzeichnet, daß** an die Schnittstelle (32) eine externe Meß- oder Steuereinheit (31) anschließbar ist, und daß die Kontrolleinheit (20) derart ausgelegt ist, daß über die Schnittstelle (32) der funktionale Zusammenhang und/oder Werte der betriebsrelevanten Parameter in Form von Daten zwischen der Kontrolleinheit (20) und der externen Meß- oder Steuereinheit (31) übermittelbar sind, so dass der funktionale Zusammenhang mittels der externen Meß- oder Steuereinheit in Verbindung mit Wartungsarbeiten überprüfbar und gegebenenfalls korrigierbar ist.

2. Abgasreinigungsanlage nach Anspruch 1, **dadurch gekennzeichnet, daß** die Schnittstelle (32) als eine Steck- oder Schraubverbindung ausgestaltet ist.

3. Vorrichtung nach einem der Ansprüche 1 bis 3, **dadurch gekennzeichnet, daß** die Kontrolleinheit (20) für die Korrektur des funktionalen Zusammenhangs ausgelegt ist.

4. Vorrichtung nach einem der Ansprüche 1 bis 3, **dadurch gekennzeichnet, daß** mittels der Kontrolleinheit (20) der funktionale Zusammenhang auf der Basis von einzelnen Meßpunkten über den gesamten Parameterwertebereich oder einen Teilbereich davon korrigierbar ist.

5. Verfahren zur katalytischen Verringerung des Schadstoffgehalts im Abgas (5) einer Verbrennungsanlage (1), bei dem ein Reaktionsmittel (11) dem Abgas (5) zugegeben und an einem Ka talysator (7) mit dem Schadstoff umgesetzt wird, wobei mittels eines funktionalen Zusammenhangs aus betriebsrelevanten Parametern der Verbrennungsanlage (1) die pro Zeiteinheit von der Verbrennungsanlage (1) emittierte Schadstoffmenge und daraus eine Zugabemenge des Reaktionsmittels (11) von einer Kontrolleinheit (20) berechnet wird, und wobei der funktionale Zusammenhang überprüft und bei Bedarf korrigiert wird, **dadurch gekennzeichet**, daß die Schadstoffmenge mit einer externen Meß- oder Steuereinheit (31) gemessen wird, und daß anhand der Meßwerte der externen Meß- oder Steuereinheit (31) die Überprüfung und gegebenenfalls die Korrektur des funktionalen Zusammenhangs in Verbindung mit Wartungsarbeiten an der Verbrennungsanlage (1) durchgeführt wird.

6. Verfahren nach Anspruch 5, **dadurch gekennzeichnet, daß** die Korrektur des funktionalen Zusammenhangs von der Kontrolleinheit (20) durchgeführt wird.

7. Verfahren nach Anspruch 5 oder 6, **dadurch gekennzeichnet, daß** der funktionale Zusammenhang auf der Basis von einzelnen Meßpunkten über den gesamten Wertebereich der betriebsrelevanten Parameter oder einen Teilbereich davon korrigiert wird.

8. Verfahren nach einem der Ansprüche 5 bis 7, **dadurch gekennzeichnet, daß** die Kontrolleinheit (20) dem externen Meßgerät oder einer externen Steuereinheit (31) geeignete Werte der betriebsrelevanten Parameter für eine Überprüfung des funktionalen Zusammenhangs übermittelt.

9. Verfahren nach einem der Ansprüche 5 bis 8, **dadurch gekennzeichnet, daß** die Schadstoffmessung im Abgasstrom vor dem Katalysator (7) durchgeführt wird.

10. Verfahren nach einem der Ansprüche 5 bis 9, **dadurch gekennzeichnet, daß** eine Schadstoffmessung im Abgasstrom hinter dem Katalysator (7) durchgeführt wird und die Aktivität des Katalysators (7) ermittelt wird.

11. Verfahren nach Anspruch 10, **dadurch gekennzeichnet, daß** bei Unterschreiten der Aktivität unter einen festgelegten Wert ein Signal an eine Anzeigeeinrichtung gegeben wird.

## Claims

1. Exhaust-gas cleaning installation (8) for a combustion system (1), having a catalytic converter (7) through which the exhaust gas can flow, a metering device (10) for introducing a reagent (11) into the exhaust gas (5) and a monitoring unit (20) which is connected to the metering device (10), the monitoring unit (20) being designed to calculate the quantity of pollutant emitted from the combustion system (1) per unit time from operationally relevant parameters of the combustion system (1) by means of a functional relationship and having an interface (32), **characterized in that** an external measuring unit or control unit (31) can be connected to the interface (32), and **in that** the monitoring unit (20) is designed in such a manner that the functional relationship and/or values for the operationally relevant parameters can be transmitted, in the form of data, via the interface (32), between the monitoring unit (20) and the external measuring unit or control unit (31), so that, by means of the external measuring unit or control unit in conjunction with maintenance work, the functional relationship can be checked and, if appropriate, can be corrected.

2. Exhaust-gas cleaning installation according to Claim 1, **characterized in that** the interface (32) is designed as a plug or screw connection.

3. Equipment according to either of Claims 1 and 2, **characterized in that** the monitoring unit (20) is designed to correct the functional relationship.

4. Equipment according to one of Claims 1 to 3, **characterized in that**, by means of the monitoring unit (20), the functional relationship can be corrected on the basis of individual measured points over the entire range of parameter values or a partial range thereof.

5. Process for catalytically reducing the level of pollutant in the exhaust gas (5) from a combustion system (1), in which a reagent (11) is added to the exhaust gas (5) and is reacted with the pollutant at a catalytic converter (7), the quantity of pollutant emitted from the combustion system (1) per unit time being calculated from operationally relevant parameters of the combustion system (1) by means of a functional relationship and, from this, an added quantity of the reagent (11) being calculated by a monitoring unit (20), and the functional relationship being checked and, if necessary, corrected, **characterized in that** the quantity of pollutant is measured using an external measuring unit or control unit (31), and **in that**, on the basis of the measured values of the external measuring unit or control unit (31), the checking and, if appropriate, the correction of the functional relationship is carried out in conjunction with maintenance work on the combustion system (1).

6. Process according to Claim 5, **characterized in that** the correction of the functional relationship is carried out by the monitoring unit (20).

7. Process according to Claim 5 or 6, **characterized in that** the functional relationship is corrected on the basis of individual measured points over the entire range of values of the operationally relevant parameters or over a partial range thereof.

8. Process according to one of Claims 5 to 7, **characterized in that** the monitoring unit (20) transmits suitable values of the operationally relevant parameters to the external measuring appliance or an external control unit (31) for the purpose of checking the functional relationship.

9. Process according to one of Claims 5 to 8, **characterized in that** the pollutant measurement is carried out in the exhaust-gas stream upstream of the catalytic converter (7).

10. Process according to one of Claims 5 to 9, **characterized in that** a pollutant measurement is carried out in the exhaust-gas stream downstream of the catalytic converter (7) and the activity of the catalytic converter (7) is determined.

11. Process according to Claim 10, **characterized in that**, in the event of the activity falling below a fixed value, a signal is emitted to a display device.

## Revendications

1. Système (8) d'épuration des gaz d'échappement d'un système (1) de combustion comprenant un pot catalytique (7), dans lequel peuvent passer les gaz d'échappement, un dispositif (10) de dosage d'introduction d'un 5 agent (11) réducteur dans les gaz d'échappement (5) et une unité (20) de contrôle reliée au dispositif (10) de dosage, l'unité (20) de contrôle étant conçue pour le calcul de la quantité de substance polluante émise par unité de temps par le système (1) de combustion à partir de paramètres du système (1) de combustion qui sont pertinents pour le fonctionnement au moyen d'une relation fonctionnelle et ayant une interface (32), caractérisé en ce qù'à l'interface (32) peut être raccordée une unité (31) extérieure de mesure ou de commande et en ce que l'unité (20) de contrôle est conçue de façon à ce que la relation fonctionnelle et/ou des valeurs de paramètres pertinents pour le fonctionnement puissent être transmises sous forme de données par l'intermédiaire de l'interface (32) entre l'unité (20) de contrôle et l'unité (31) extérieure de mesure ou de commande, de sorte que la relation fonctionnelle peut être vérifiée et le cas échéant corrigée au moyen de l'unité extérieure de mesure ou de commande en liaison avec des travaux d'entretien.

2. Système d'épuration de gaz d'échappement suivant la revendication 1, **caractérisé en ce que** l'interface (32) est conformée en assemblage à enfichage ou en assemblage vissé.

3. Système d'épuration de gaz d'échappement suivant la revendication 1 ou 2, **caractérisé en ce que** l'unité (20) de contrôle est conçue pour la correction de la relation fonctionnelle.

4. Système d'épuration de gaz d'échappement suivant l'une des revendications 1 à 3, **caractérisé en ce que** la relation fonctionnelle peut être corrigée au moyen de l'unité (20) de contrôle sur la base de points de mesure individuels sur tout le domaine de valeur des paramètres ou sur une partie de ce domaine.

5. Procédé de réduction catalytique de la teneur en substance polluante des gaz d'échappement (5) d'un système (1) de combustion, dans lequel on ajoute un agent (11) réducteur aux gaz d'échappement (5) et on le fait réagir sur la substance polluante sur un pot (7) catalytique en calculant au moyen d'une relation fonctionnelle à partir de paramètres pertinents pour le fonctionnement du système (1) de combustion la quantité de substance polluante émise par unité de temps par le système (1) de combustion et à partir de cela une quantité à ajouter de l'agent (11) réducteur à l'aide d'une unité (20) de contrôle et on vérifie et en cas de besoin on corrige la relation fonctionnelle, **caractérisé en ce que** l'on mesure la quantité de substance polluante par une unité (31) extérieure de mesure ou de commande et **en ce qu'**au moyen des valeurs de mesure de l'unité (31) extérieure de mesure ou de commande on effectue la vérification et le cas échéant la correction de la relation fonctionnelle en liaison avec des travaux d'entretien sur le système (1) de combustion.

6. Procédé suivant la revendication 5, **caractérisé en ce que** l'on effectue la correction de la relation fonctionnelle par l'unité (20) de contrôle.

7. Procédé suivant la revendication 5 ou 6, **caractérisé en ce que** l'on corrige la relation fonctionnelle sur la base de points de mesure individuels sur tout le domaine de valeur des paramètres pertinents pour le fonctionnement ou sur une partie de ce domaine.

8. Procédé suivant l'une des revendications 5 à 7, **caractérisé en ce que** l'unité (20) de contrôle envoie à l'appareil extérieur de mesure ou à l'unité (31) extérieure de commande des paramètres pertinents de fonctionnement qui sont appropriés à une vérification de la relation fonctionnelle.

9. Procédé suivant l'une des revendications 5 à 8, **caractérisé en ce que** l'on effectue la mesure de la substance polluante dans le courant des gaz d'échappement en amont du pot (7) catalytique.

10. Procédé suivant l'une des revendications 5 à 9, **caractérisé en ce que** l'on effectue une mesure de la substance polluante dans le courant des gaz d'échappement en aval du pot (7) catalytique et on détermine l'activité du pot (7) catalytique.

11. Procédé suivant la revendication 10, **caractérisé en ce que** si l'activité devient inférieure à une valeur donnée on émet un signal sur un dispositif d'affichage.
